# EUROPEAN PATENT APPLICATION

(11) **EP 4 844 932 A1**
(43) Date of publication of application: **25.11.2026**
(21) Application number: 25848822.0
(22) Date of filing: 24.07.2025
(51) Int. Cl.: H01M 50/531, H01M 50/533, H01M 50/538, H01M 50/54, H01M 10/0585, H01M 10/0587

(54) **SECONDARY BATTERY AND METHOD FOR MANUFACTURING SAME**

(30) Priority: 01.08.2024 KR 20240102245
(71) Applicant: LG Energy Solution, Ltd., Seoul 07335 (KR)
(72) Inventor: BOK, Cheon Hee, Daejeon 34122 (KR); SUNG, Joo Hwan, Daejeon 34122 (KR)
(74) Representative: Goddar, Heinz J.
(86) International application number: PCT/KR2025/010957
(87) International publication number: WO 2026/029480

(57) **Abstract**

The present disclosure relates to a secondary battery and a method of manufacturing the same. The current collector according to the present disclosure includes a body portion having a thickness of T1, and a stepped portion formed at an end of the body portion in a bending direction and having a thickness of T2. The thickness T1 of the body portion and the thickness T2 of the stepped portion differ from each other. To weld the current collector and foil tabs, the thickness of the stepped portion may be adjusted, or an output of a welding apparatus may be adjusted. The present disclosure may prevent an electrode assembly located under a void region from being affected during a welding process. Accordingly, a separator of the electrode assembly or the like may be prevented from being damaged during the welding process.

## Description

### Technical Field

The present disclosure relates to a secondary battery and a method of manufacturing the same, and more particularly, to a secondary battery and a method of manufacturing the same in which a stepped portion is formed in a current collector, and an output of a welding apparatus is adjusted in consideration of a thickness of the stepped portion during welding of foil tabs and the current collector.

### Background Art

Recently, as the demand for portable electronic devices has rapidly increased and the development of electric vehicles, energy storage batteries, robots, satellites, and the like has become more active, intensive research has been conducted on high-performance secondary batteries capable of repeated charging and discharging.

Secondary batteries may be classified, according to the shape of a battery casing, into a can-type secondary battery, in which an electrode assembly is embedded in a metal can, and a pouch-type secondary battery, in which an electrode assembly is embedded in a pouch formed of an aluminum laminate sheet. The can-type secondary battery may also be classified into a cylindrical secondary battery and a prismatic secondary battery according to the shape of the metal can.

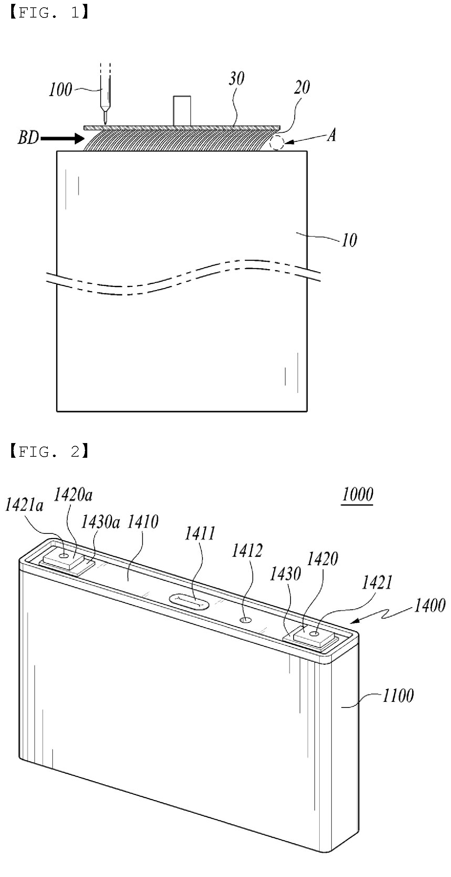

In a secondary battery, foil tabs of an electrode assembly and a current collector are coupled to each other by welding. FIG. 1 is a view illustrating welding in a state in which foil tabs are bent in a bending direction during welding of the foil tabs and the current collector. As illustrated in FIG. 1, when foil tabs 20 and a current collector 30 are welded, the foil tabs 20 are bent in a bending direction BD to increase a contact area between the foil tabs 20 and the current collector 30, and the current collector 30 is seated on an upper side of the foil tabs 20 and welded thereto. In this case, because an upper portion of one surface of each of the foil tabs 20, rather than an upper end of the foil tab 20, comes into contact with the current collector 30, reliable welding may be achieved. The welding is performed on an upper side of the current collector 30 by using a laser or ultrasonic welding apparatus 100.

However, when the foil tabs 20 are bent in the bending direction, a void region A is formed between the foil tab 20 positioned at an outer side in the bending direction and an electrode assembly 10. Because the number of overlapping foil tabs 20 in the void region A is smaller than that in other regions, a welded layer of the foil tabs 20 in the void region A becomes thinner than in other regions. Therefore, when welding is performed above the void region A, heat generated during the welding process may be transferred to the electrode assembly 10, and as a result, a problem may arise that a separator or the like of the electrode assembly 10 below the void region A may be melted.

### DISCLOSURE

### Technical Problem

The present disclosure is directed to providing a secondary battery and a method of manufacturing the same, which may prevent an electrode assembly from being affected during welding of foil tabs and a current collecting plate.

### Technical Solution

A secondary battery according to an embodiment of the present disclosure may include an electrode assembly and a current collector. The electrode assembly may include an electrode portion, and a plurality of foil tabs formed on an end of the electrode portion. The current collector may include a body portion and a stepped portion. The body portion may be welded to the plurality of foil tabs from an upper side of the foil tabs bent in a bending direction and have a thickness of T1. The stepped portion may be formed at an end of the body portion in the bending direction and have a thickness of T2. The thickness T1 of the body portion and the thickness T2 of the stepped portion may differ from each other.

In the secondary battery according to an embodiment of the present disclosure, the stepped portion may be formed to correspond to a void region formed between the foil tab located at an outermost side in the bending direction and the electrode portion when the foil tabs are bent in the bending direction.

In the secondary battery according to an embodiment of the present disclosure, the thickness T1 of the body portion may be greater than the thickness T2 of the stepped portion. Here, the thickness T2 of the stepped portion may be greater than or equal to 1/3 and less than or equal to 2/3 of the thickness T1 of the body portion.

In the secondary battery according to an embodiment of the present disclosure, the thickness T1 of the body portion may be less than the thickness T2 of the stepped portion. The thickness T2 of the stepped portion may be determined depending on a height of the void region.

In the secondary battery according to an embodiment of the present disclosure, the thickness T2 of the stepped portion may vary in a stepwise manner.

In the secondary battery according to an embodiment of the present disclosure, the thickness T2 of the stepped portion may gradually vary.

In the secondary battery according to an embodiment of the present disclosure, the stepped portion may be sectioned into N regions depending on the number of foil tabs positioned under the stepped portion. The thickness T2 of the stepped portion may be uniform in each same region and different between different regions.

In the secondary battery according to an embodiment of the present disclosure, the thickness T2 of the stepped portion may vary depending on the number of foil tables positioned under the stepped portion.

In the secondary battery according to an embodiment of the present disclosure, the stepped portion may be formed from a position above a portion where the foil tab positioned at an outermost side in the bending direction is connected to the electrode portion to an end in the bending direction.

In the secondary battery according to an embodiment of the present disclosure, a formation length of the stepped portion may vary depending on a bending angle at which the foil tabs are bent in the bending direction.

In the secondary battery according to an embodiment of the present disclosure, a first weld formed by welding the body portion and a second weld formed by welding the stepped portion may be formed on the current collector.

In the secondary battery according to an embodiment of the present disclosure, the electrode portion may include a plurality of unit electrode plates each having the corresponding foil tab formed on an end thereof, and a separator positioned respectively between the plurality of unit electrode plates. The electrode portion may be formed by stacking or winding the plurality of unit electrode plates and the separator.

A method of manufacturing a secondary battery according to an embodiment of the present disclosure may include a preparation operation, a bending operation, a seating operation, and a welding operation. In the preparation operation, an electrode assembly including an electrode portion and a plurality of foil tabs formed on an end of the electrode portion may be prepared. In the bending operation, the plurality of foil tabs may be bent in a bending direction. In the seating operation, a current collector may be seated on an upper side of the bent foil tabs, the current collector including a body portion having a thickness of T1, and a stepped portion formed at an end of the body portion in the bending direction and having a thickness of T2. The thickness T1 of the body portion may differ from the thickness T2 of the stepped portion. In the welding operation, the foil tabs and the current collector may be welded to each other.

In the method according to an embodiment of the present disclosure, in the bending operation, a bending angle at which the foil tabs are bent in the bending direction may be adjusted depending on a formation length of the stepped portion.

In the method according to an embodiment of the present disclosure, in the seating operation, the stepped portion may be seated to correspond to the void region.

In the method according to an embodiment of the present disclosure, in the welding operation, an output of a welding apparatus may vary between when welding the body portion and when welding the stepped portion.

In the method according to an embodiment of the present disclosure, in the welding operation, the output of the welding apparatus when welding the stepped portion may be adjusted depending on the sum of thicknesses of the foil tabs that are positioned under the stepped portion.

In the method according to an embodiment of the present disclosure, the welding operation may include a first welding operation of welding the body portion, and a second welding operation of welding the stepped portion.

### Advantageous Effects

According to the present disclosure, an output of a welding apparatus may be adjusted according to a thickness of a stepped portion formed in a current collector during welding of foil tabs and a current collector. Accordingly, over-welding or under-welding in a void region may be prevented.

Furthermore, in the present disclosure, the thickness of the stepped portion may be determined based on the number of foil tabs located below the stepped portion, thereby preventing an electrode assembly located below the void region from being damaged during a process of welding the foil tabs and the current collector.

### Brief Description of Drawings

FIG. 1 is a view illustrating welding in a state in which foil tabs are bent in a bending direction during welding of the foil tabs and a current collector.
FIG. 2 is a view illustrating a secondary battery according to an embodiment of the present disclosure.
FIG. 3 is an exploded view of the secondary battery according to an embodiment of the present disclosure.
FIG. 4 is a view illustrating a state in which a current collector and foil tabs are welded in the secondary battery according to an embodiment of the present disclosure.
FIG. 5 is a view illustrating the current collector of the secondary battery according to an embodiment of the present disclosure.
FIG. 6 is a view illustrating a current collector having a stepped portion with a thickness reduced in a stepwise manner, seated on foil tabs according to an embodiment of the present disclosure.
FIG. 7 is a view illustrating a current collector having a stepped portion with a gradually reduced thickness, seated on the foil tabs according to an embodiment of the present disclosure.
FIG. 8 is a view illustrating a concept of a bending angle at which the foil tab is bent in a bending direction.
FIG. 9 is a view illustrating a current collector having a stepped portion with a thickness increased in a stepwise manner, seated on the foil tabs according to an embodiment of the present disclosure.
FIG. 10 is a view illustrating a current collector having a stepped portion with a gradually increased thickness, seated on the foil tabs according to an embodiment of the present disclosure.
FIG. 11a is a conceptual view illustrating a transition portion formed in a current collector with a stepped portion having a thickness reduced in a stepwise manner according to an embodiment of the present disclosure, and FIG. 11b is a conceptual view illustrating a transition portion formed in current collector with a stepped portion having a thickness increased in a stepwise manner according to an embodiment of the present disclosure.
FIG. 12 is a conceptual view illustrating a stepped portion sectioned into N regions, in which the stepped portion varies in a stepwise manner in each region, according to an embodiment of the present disclosure.
FIG. 13 is a view illustrating a weld formed on an upper side of the current collector according to an embodiment of the present disclosure.
FIG. 14a is a view illustrating a first weld and a second weld formed to be collinear on the upper side of the current collector according to another embodiment of the present disclosure, and FIG. 14b is a view illustrating a first weld and a second weld formed on different lines offset from each other on the upper side of the current collector according to another embodiment of the present disclosure.
FIG. 15 is a flowchart illustrating a method of manufacturing the secondary battery according to an embodiment of the present disclosure.

### Best Mode

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, exemplary embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

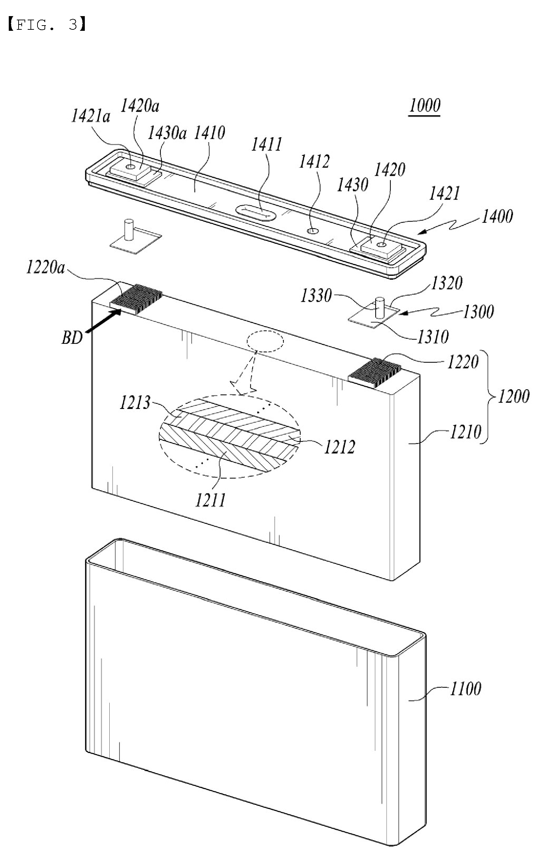

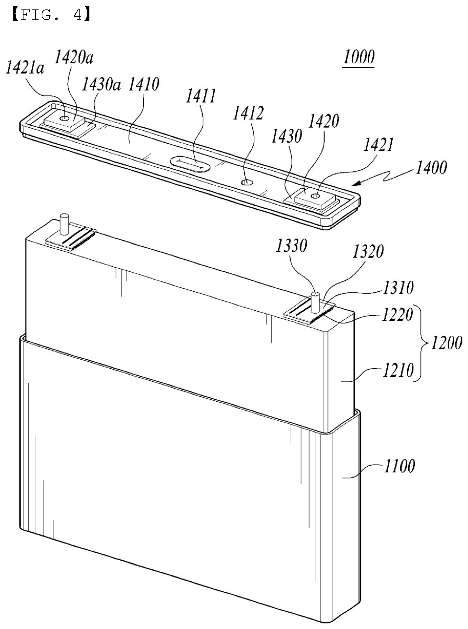

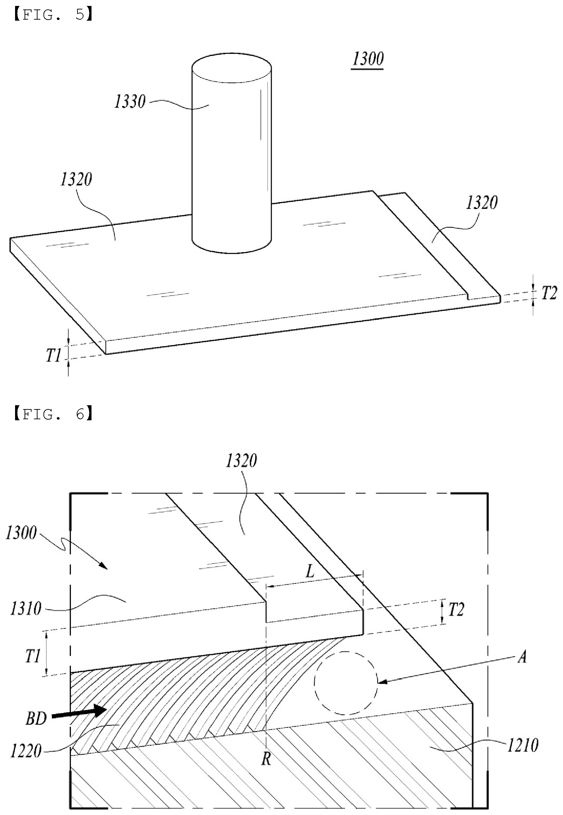

FIG. 2 is a view illustrating a secondary battery according to an embodiment of the present disclosure. FIG. 3 is an exploded view of the secondary battery according to an embodiment of the present disclosure. FIG. 4 is a view illustrating a state in which a current collector and foil tabs are welded in the secondary battery according to an embodiment of the present disclosure. FIG. 5 is a view illustrating the current collector of the secondary battery according to an embodiment of the present disclosure.

As illustrated in FIGS. 2 to 5, a secondary battery 1000 according to an embodiment of the present disclosure includes a casing 1100, an electrode assembly 1200, current collectors 1300, and a cap assembly 1400.

The casing 1100 forms an outer shape of the secondary battery 100. The casing 1100 may define a space capable of accommodating the electrode assembly 1200 therein, and may have an opening on one surface thereof. In the present embodiment, the casing 1100 has a rectangular parallelepiped shape, but is not limited thereto and may be modified in various ways. The casing 1100 may be made of a rigid material capable of protecting the electrode assembly 1200 accommodated therein. For example, the casing 1100 may be made of metal such as aluminum or stainless steel.

Electrolyte may be received together with the electrode assembly 1200 in the casing 1100. The electrolyte may include a lithium salt such as LiPF₆ or LiBF₄ in an organic solvent such as ethylene carbonate (EC), propylene carbonate (PC), diethyl carbonate (DEC), ethyl methyl carbonate (EMC), or dimethyl carbonate (DMC). The electrolyte may be in a liquid, solid, or gel phase.

The electrode assembly 1200 is accommodated in the casing 1100. The electrode assembly 1200 includes an electrode portion 1210 and a plurality of foil tabs 1220 and 1220a.

The electrode portion 1210 includes a plurality of unit electrode plates 1211 and 1212 and separators 1213. An active material may be applied to the unit electrode plates 1211 and 1212. The plurality of unit electrode plates 1211 and 1212 may include first unit electrode plates 1211 each of which is formed by applying an active material such as a transition metal oxide to a metal plate such as aluminum, and second unit electrode plates 1212 each of which is formed by applying an active material such as graphite or carbon to a metal plate such as copper or nickel.

The separators 1213 are positioned between the plurality of unit electrode plates 1211 and 1212 to prevent a short circuit between the unit electrode plates 1211 and 1212. The separators 316 may be made of polyethylene, polypropylene, a composite material thereof, or the like.

The electrode portion 1210 may be formed by positioning the separators 1213 between the first unit electrode plates 1211 and the second unit electrode plates 1212, which are alternately arranged. In other words, in an embodiment, the electrode portion 1210 may be formed by alternately stacking the first unit electrode plate 1211, the separator 1213, the second unit electrode plate 1212, and the separator 1213 in the listed order. In another embodiment, the electrode portion 1210 may be formed by arranging the first unit electrode plate 1211, the separator 1213, and the second unit electrode plate 1212 in the listed order and then winding the arranged structure.

Although, in the present embodiment, the electrode assembly 1200 is illustrated as including the single electrode portion 1210, in another embodiment, the electrode assembly 1200 may include a plurality of electrode portions 1210. The plurality of electrode portions 1210 may be electrically connected to one another.

The foil tabs 1220 and 1220a, to which no active material is applied, are respectively formed at one end of the plurality of unit electrode plates 1211 and 1212. In an embodiment, each of the unit electrode plates 1211 and 1212 and the foil tab 1220 or 1220a may be integrally formed by cutting a predetermined portion of a single metal plate using a laser or the like, such that the unit electrode plate 1211 or 1212 and the foil tab 1220 or 1220a remain.

The foil tabs 1220 of the first unit electrode plates 1211 overlap each other at a first position. The foil tabs 1220a of the second unit electrode plates 1212 overlap each other at a second position. In another embodiment, a position at which the foil tabs 1220 or 1220a of each of the first unit electrode plates 1211 and the second unit electrode plates 1212 overlap each other may be two or more. The plurality of foil tabs 1220 or 1220a that overlap each other at the same position may be connected to each other by ultrasonic welding, laser welding, or the like to facilitate movement of current.

The current collectors 1300 electrically connect the foil tabs 1220 and 1220a to terminals 1420 and 1420a of the cap assembly 1400, respectively. Referring to FIG. 5, each of the current collector 1300 includes a body portion 1310 and a stepped portion 1320. In the present embodiment, the current collector 1300 has a plate shape, but is not limited thereto.

The body portion 1310 of each of the current collectors 1300 is welded at a lower surface thereof to the corresponding foil tabs 1220 or 1220a from above the foil tabs 1220 or 1220a. A method such as ultrasonic welding, laser welding, or the like may be used for the welding. In order to increase a contact area between the foil tabs 1220 or 1220a and the body portion 1310 during welding of the foil tabs 1220 or 1220a and the body portion 1310 and thereby enable reliable welding, the foil tabs 1220 or 1220a are bent in a bending direction BD, and the body portion 1310 is seated on and welded to an upper side of the foil tabs 1220 or 1220a. During the welding, the body portion 1310 may be pressed toward the foil tabs 1220 or 1220a.

In the present embodiment, the foil tabs 1220 joined together and the foil tabs 1220a joined together may be bent in the same bending direction BD. The foil tabs 1220 of the first unit electrode plates 1211 and the foil tabs 1220a of the second unit electrode plates 1212 may be bent in different bending directions BD.

Upper surfaces of the current collectors 1300 are respectively connected to the terminals 1420 and 1420a. For connection with the terminals 1420 and 1420a, each of the current collectors 1300 may include a connection portion 1330. In the present embodiment, the connection portion 1330 has a rod shape, but is not limited thereto. In another embodiment, a portion of each of the current collectors 1300 may be formed to protrude convexly such that the convex portion is connected to the terminal 1420 or 1420a.

The stepped portion 1320 is formed at an end of the body portion 1310 in the bending direction BD. A thickness T2 of the stepped portion 1320 is different from a thickness T1 of the body portion 1310.

The cap assembly 1400 seals the opening of the casing 1100 in which the electrode assembly 1200 is accommodated. The cap assembly 1400 includes a cap plate 1410 and the terminals 1420 and 1420a.

The cap plate 1410 may have a plate shape that covers the opening of the casing 1100. The cap plate 1410 may have a shape corresponding to that of the opening of the casing 1100. The cap plate 1410 may be formed of the same material as the casing 1100, and may be fixed to the casing 1100 by a method such as laser welding.

The cap plate 1410 may be formed with an electrolyte injection hole 1411 and a vent hole 1412. Electrolyte can be injected into the casing 1100 through the electrolyte injection hole 1411. The vent hole 1412 opens when an internal pressure of the casing 1100 exceeds a reference value. In the present embodiment, the vent hole 1412 is formed in the cap plate 1410, but in other embodiments, the vent hole 1412 may be formed in the casing 1100.

The terminals 1420 and 1420a may be formed to protrude from the cap plate 1410. The terminals 1420 and 1420a are respectively electrically connected to the foil tabs 1220 and 1220a through the current collectors 1300. The terminals 1420 and 1420a may each have a circular or rectangular plate shape.

Terminal holes 1421 and 1421a may be respectively formed in the terminals 1420 and 1420a. The connection portions 1310 are respectively inserted into the terminal holes 1421 and 1421a.

Insulators 1430 and 1430a may be respectively positioned between the terminals 1420 and 1420a and the cap plate 1410. The insulators 1430 and 1430a electrically insulate the terminals 1420 and 1420a and the cap plate 1410 from each other.

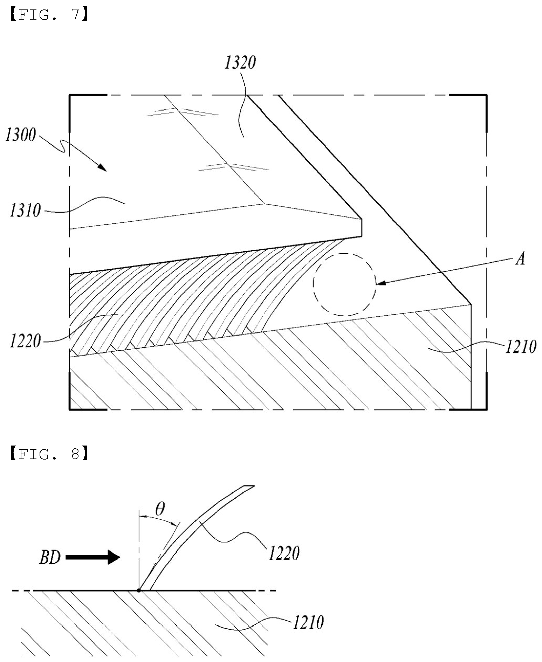

FIG. 6 is a view illustrating a current collector having a stepped portion with a thickness reduced in a stepwise manner, seated on foil tabs according to an embodiment of the present disclosure. FIG. 7 is a view illustrating a current collector having a stepped portion with a gradually reduced thickness, seated on the foil tabs according to an embodiment of the present disclosure. FIG. 8 is a view illustrating a concept of a bending angle at which the foil tab is bent in a bending direction.

Referring to FIG. 6, the current collector 1300 according to an embodiment of the present disclosure includes the body portion 1310 and the stepped portion 1320. The stepped portion 1320 is positioned to correspond to a void region A formed between an outermost foil tab 1220 located in the bending direction BD and the electrode portion 1210 when the foil tabs 1220 are bent in the bending direction BD. The expression "corresponding to the void region" indicates that, in a plan view, the void region A does not extend beyond the stepped portion 1320. In the present embodiment, the stepped portion 1320 is formed from a position R above a portion where the outermost foil tab 1220 in the bending direction BD is connected to the electrode portion 1210 to the end in the bending direction BD. In another embodiment, the stepped portion 1320 may be formed from a position further moved in a direction opposite to the bending direction BD than the position R above the portion where the outermost foil tab 1220 is connected to the electrode portion 1210.

As such, when the stepped portion 1320 is positioned to correspond to the void region A, adjustment in thickness of the stepped portion 1320 and adjustment in output of the welding apparatus affect the welding above the void region. Accordingly, through such adjustment, it is possible to prevent welding of the foil tabs 1220 and the current collector 1300 from affecting the electrode assembly located under the void region.

A formation length L by which the stepped portion 1320 is formed may vary depending on a bending angle θ at which the foil tabs 1220 are bent in the bending direction BD. Referring to FIG. 8, the bending angle θ is an angle formed between the foil tabs 1220 and a plane perpendicular to an upper surface of the electrode portion 1210 when the foil tabs 1220 are bent in the bending direction BD. As the bending angle θ increases, the formation length L of the stepped portion 1320 is increased, and as the bending angle θ decreases, the formation length L of the stepped portion 1320 is reduced.

In the present embodiment, the thickness T1 of the body portion 1310 is greater than the thickness T2 of the stepped portion 1320. Accordingly, during welding of the foil tabs 1220 and the current collector 1300, the output of the welding apparatus may be set lower when welding the stepped portion 1320 than when welding the body portion 1310, thereby preventing over-welding.

More specifically, the thickness T2 of the stepped portion 1320 may be 1/3 or more and 2/3 or less of the thickness T1 of the body portion 1310. If the thickness T2 of the stepped portion 1320 is 1/3 or less relative to the thickness T1 of the body portion 1310, over-welding may occur at the stepped portion 1320 during welding of the foil tabs 1220 and the current collector 1300. If the thickness T2 of the stepped portion 1320 is 2/3 or more relative to the thickness T1 of the body portion 1310, fine adjustment of the output of the welding apparatus is required during welding of the foil tabs 1220 and the current collector 1300, which makes the adjustment difficult.

The thickness T2 of the stepped portion 1320 may be determined based on a height of the void region A. As the height of the void region A increases, the thickness T2 of the stepped portion 1320 is increased, and as the height of the void region A decreases, the thickness T2 of the stepped portion 1320 is reduced.

Referring to FIG. 7, the thickness T2 of the stepped portion 1320 may gradually vary. In the present embodiment, the thickness T2 of the stepped portion 1320 gradually decreases. When the thickness T2 of the stepped portion 1320 gradually vary in this way, the output of the welding apparatus may be adjusted to gradually change during welding of the foil tabs 1220 and the current collector 1300, thereby enabling the body portion 1310 and the stepped portion 1320 to be successively welded.

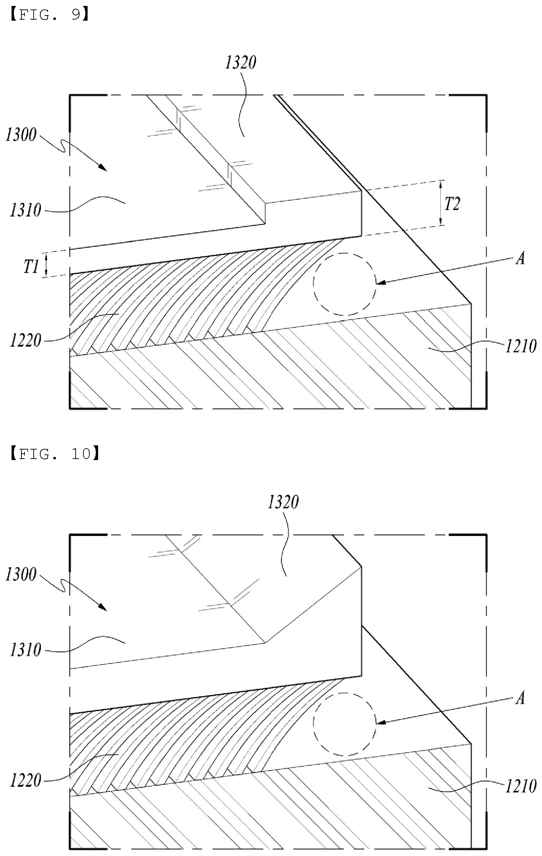

FIG. 9 is a view illustrating a current collector having a stepped portion with a thickness increased in a stepwise manner, seated on the foil tabs according to an embodiment of the present disclosure. FIG. 10 is a view illustrating a current collector having a stepped portion with a gradually increased thickness, seated on the foil tabs according to an embodiment of the present disclosure.

Referring to FIG. 9, the thickness T1 of the body portion 1310 of the current collector 1300 according to an embodiment of the present disclosure is smaller than the thickness T2 of the stepped portion 1320. Accordingly, during welding of the foil tabs 1220 and the current collector 1300, the output of the welding apparatus may be set higher when welding the stepped portion 1320 than when welding the body portion 1310, thereby preventing under-welding.

The thickness T2 of the stepped portion 1320 may vary depending on the number of the foil tabs 1220 located under the stepped portion 1320. As the number of the foil tabs 1220 located under the stepped portion 1320 increases, the thickness T2 of the stepped portion 1320 is reduced, and as the number of the foil tabs 1220 located under the stepped portion 1320 decreases, the thickness T2 of the stepped portion 1320 is increased.

In an embodiment, the thickness T2 of the stepped portion 1320 may be set such that a sum of the thickness T1 of the body portion 1310 and a thickness of the foil tabs 1220 located under the body portion 1310 becomes equal to a sum of the thickness T2 of the stepped portion 1320 and the thickness of the foil tabs 1220 located under the stepped portion 1320. In this case, during welding of the foil tabs 1220 and the current collector 1300, the output of the welding apparatus may be maintained constant.

As illustrated in FIG. 10, the thickness T2 of the stepped portion 1320 may gradually vary. In the present embodiment, the thickness T2 of the stepped portion 1320 gradually increases. When the thickness T2 of the stepped portion 1320 gradually varies in this way, the output of the welding apparatus may be adjusted to gradually change during welding of the foil tabs 1220 and the current collector 1300, thereby enabling the body portion 1310 and the stepped portion 1320 to be successively welded.

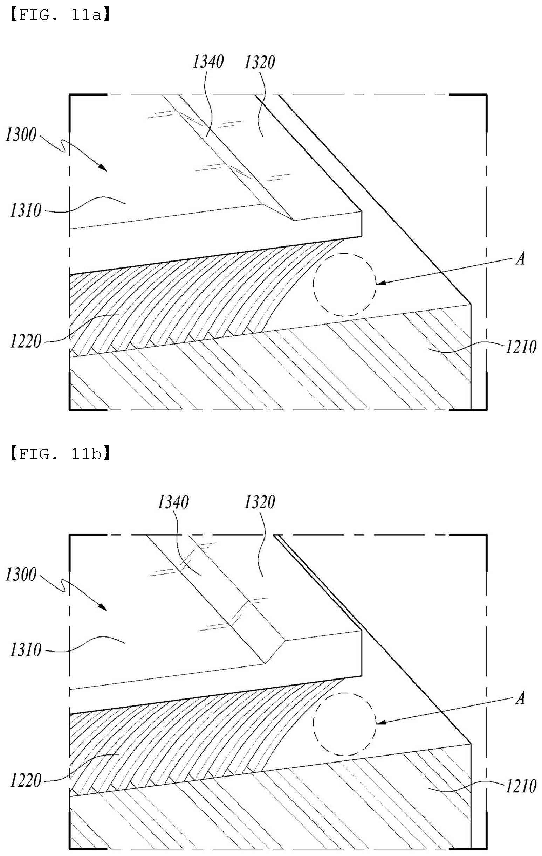

FIG. 11a is a conceptual view illustrating a transition portion formed in a current collector with a stepped portion having a thickness reduced in a stepwise manner according to an embodiment of the present disclosure, and FIG. 11b is a conceptual view illustrating a transition portion formed in current collector with a stepped portion having a thickness increased in a stepwise manner according to an embodiment of the present disclosure.

Referring to FIGS. 11a and 11b, in the current collector 1300 according to an embodiment of the present disclosure, the thicknesses T1 and T2 of the body portion 1310 and the stepped portion 1320 may vary in a stepwise manner. In the case where the thicknesses T1 and T2 of the body portion 1310 and the stepped portion 1320 vary in a stepwise manner, it is difficult to weld the body portion 1310 and the stepped portion 1320 in a single welding operation during welding of the foil tabs 1220 and the current collector 1300.

In order to overcome the foregoing problem, a transition portion 1340 may be formed at a boundary between the body portion 1310 and the stepped portion 1320. The transition portion 1340 makes the boundary between the body portion 1310 and the stepped portion 1320 gentle. Accordingly, during welding, it is not necessary to stop the operation of the welding apparatus at the boundary between the body portion 1310 and the stepped portion 1320.

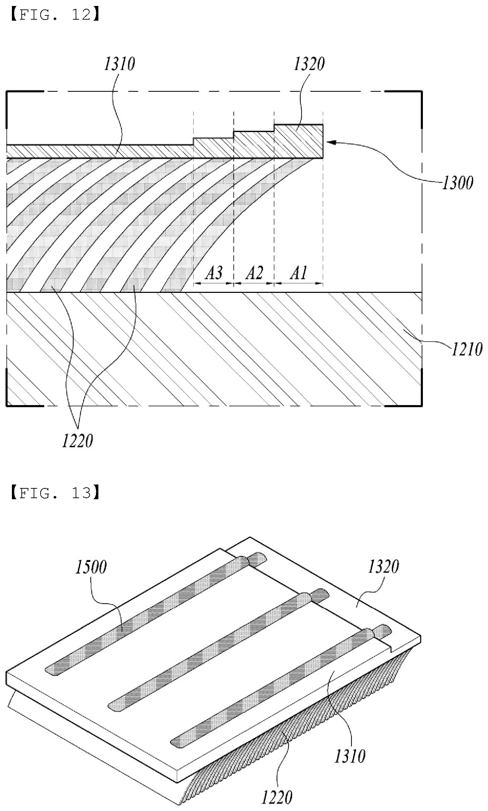

FIG. 12 is a conceptual view illustrating a stepped portion sectioned into N regions, in which the stepped portion varies in a stepwise manner in each region, according to an embodiment of the present disclosure.

Referring to FIG. 12, in the current collector 1300 according to the present embodiment, the thickness T1 of the body portion 1310 is smaller than the thickness T2 of the stepped portion 1320. The stepped portion 1320 may be sectioned into N regions depending on the number of the foil tabs 1220 located thereunder. In the present embodiment, the stepped portion 1320 is sectioned into three regions A1, A2, and A3, but in another embodiment, the stepped portion 1320 may be section into two regions or four or more regions.

In the region A1, one foil tab 1220 is located under the stepped portion 1320, in the region A2, two foil tabs 1220 are located under the stepped portion 1320, and in the region A3, three foil tabs 1220 are located under the stepped portion 1320. Accordingly, a thickness of the overlapped foil tabs 1220 in the region A2 is twice that in the region A1, and a thickness of the overlapped foil tabs 1220 in the region A3 is three times that in the region A1. In this case, if welding in the region A1 is performed after setting the output of the welding apparatus such that over-welding does not occur, under-welding may occur not only in the regions A2 and A3 but also in the body portion 1310. Therefore, there is a need to set the output of the welding apparatus such that proper welding can be performed in the body portion 1310, and to adjust the thickness of the stepped portion 1320 so that over-welding does not occur in the stepped portion 1320. In this case, the stepped portion 1320 may be formed to have a uniform thickness in each same region and to have different thicknesses in different regions. For example, the stepped portion 1320 may have a uniform thickness in the region A1 and also have a uniform thickness in the region A2, but the thicknesses in the regions A1 and A2 may differ from each other.

In the present embodiment, the thickness of the stepped portion 1320 may be increased in order of the regions A1, A2, and A3. However, in each region, the thickness of the receiving portion 1320 may be maintained constant. That is, the thickness of the receiving portion 1320 varies in a stepwise manner. Accordingly, it is possible to prevent over-welding from occurring in the void region.

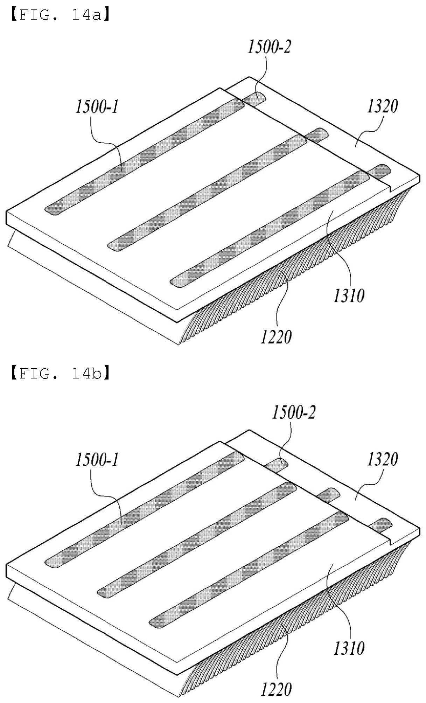

FIG. 13 is a view illustrating a weld formed on an upper side of the current collector according to an embodiment of the present disclosure. FIG. 14a is a view illustrating a first weld and a second weld formed to be collinear on the upper side of the current collector according to another embodiment of the present disclosure, and FIG. 14b is a view illustrating a first weld and a second weld formed on different lines offset from each other on the upper side of the current collector according to another embodiment of the present disclosure.

Referring to FIG. 13, welding may be performed on an upper side of the body portion 1310 and the stepped portion 1320 of the current collector 1300. The welding may be performed by using a laser welding apparatus, an ultrasonic welding apparatus, or the like. The welding method may be a line welding method performed along the bending direction.

In the present embodiment, the body portion 1310 and the stepped portion 1320 may be welded in a continuous line so that a continuous weld 1500 is formed on the current collector 1300. In order to enable welding in a continuous line in this way, the thickness of the stepped portion 1320 may gradually vary, or the transition portion may be formed at a boundary between the body portion 1310 and the stepped portion 1320. In the present embodiment, three welds 1500 are formed, but the disclosure is not limited thereto.

In another embodiment, as referred to in FIGS. 14a and 14b, welding of the body portion 1310 and welding of the stepped portion 1320 may be separately performed. Accordingly, a first weld 1500-1 formed by welding the body portion 1310 and a second weld 1500-2 formed by welding the stepped portion 1320 are formed on the current collector 1300. In this case, the welding of the body portion 1310 may be performed first, and then the welding of the stepped portion 1320 may be subsequently performed. In another embodiment, the welding order may be changed.

As illustrated in FIG. 14a, the first weld 1500-1 and the second weld 1500-2 may be formed to be collinear. In another embodiment, as referred to in FIG. 14b, the first weld 1500-1 and the second weld 1500-2 may be formed on different lines.

In the present embodiment, when the current collector 1300 and the foil tabs 1220 are welded, the output of the welding apparatus may be adjusted depending on the thickness of the stepped portion 1320. In addition, the output of the welding apparatus may vary between the welding of the body portion 1310 and the welding of the stepped portion 1320.

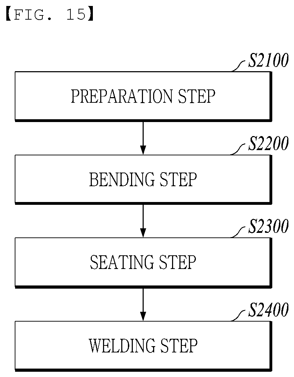

FIG. 15 is a flowchart illustrating a method of manufacturing the secondary battery according to an embodiment of the present disclosure.

Referring to FIG. 15, a method of manufacturing the secondary battery according to an embodiment of the present disclosure includes a preparation step S2100, a bending step S2200, a seating step S2300, and a welding step S2400.

In the preparation step S2100, the electrode assembly is prepared. The electrode assembly includes the electrode portion and the plurality of foil tabs formed on one end of the electrode portion. The electrode portion includes the plurality of unit electrode plates coated with an active material and the separators configured to prevent short-circuiting between the plurality of unit electrode plates. The foil tabs are formed at one end of the plurality of unit electrode plates, and no active material is applied to the foil tabs.

The electrode portion may be formed by positioning the separators between the unit electrode plates alternately arranged. In an embodiment, the electrode portion is formed by alternately stacking the unit electrode plates and the separators in an order of the unit electrode plate, the separator, and the unit electrode plate. In another embodiment, the electrode portion may be formed by arranging the unit electrode plate, the separator, and the unit electrode plate in the listed order and then winding the arranged structure.

In the bending step S2200, the plurality of foil tabs are bent in the bending direction. Accordingly, the foil tabs and the body portion of the current collector may be brought into contact with each other over a relatively large area during welding, thereby enabling reliable welding.

In the seating step S2300, the current collector is seated on an upper side of the bent foil tabs. The current collector includes the body portion having a thickness T1 and the stepped portion formed at the end of the body portion in the bending direction and having a thickness T2. The thickness T1 of the body portion and the thickness T2 of the stepped portion are different from each other.

In the welding step S2400, the foil tabs and the current collector are welded. The welding is performed by using a welding apparatus. In the present disclosure, a method such as laser welding or ultrasonic welding may be used.

In an embodiment, in the seating step S2300, the stepped portion may be seated to correspond to the void region. The foregoing enables welding of the foil tabs and the current collector to be prevented from affecting the electrode assembly located under the void region by adjustment of the stepped portion.

In another embodiment, in the bending step S2200, the bending angle may be adjusted depending on the formation length of the stepped portion. If the formation length of the stepped portion is relatively long, the bending angle becomes large, and if the formation length is relatively short, the bending angle becomes small. The foregoing facilitates seating of the stepped portion so as to correspond to the void region.

In an embodiment of the present disclosure, in the welding step S2400, the output of the welding apparatus may vary between the welding of the body portion and the welding of the stepped portion. Accordingly, over-welding or under-welding may be prevented from occurring during welding of the stepped portion.

In another embodiment, in the welding step S2400, when the stepped portion is welded, the output of the welding apparatus may be adjusted depending on the sum of thicknesses of the foil tabs located under the stepped portion. As the sum of the thicknesses of the foil tabs increases, the output of the welding apparatus is lowered, and as the sum of the thicknesses decreases, the output of the welding apparatus is increased. Through such adjustment, over-welding or under-welding may be prevented during welding of the stepped portion.

In an embodiment of the present disclosure, the welding step S2400 may include a first welding step of welding the body portion and a second welding step of welding the stepped portion. That is, in the present embodiment, the welding of the body portion and the welding of the stepped portion may be separately performed. Accordingly, a first weld formed by welding the body portion and a second weld formed by welding the stepped portion are formed on the current collector.

In an embodiment, the first welding step may be performed first, and the second welding step may be subsequently performed. In another embodiment, the second welding step may be performed first, and the first welding step may be subsequently performed. The first welding step and the second welding step may be performed on the same line, but are not limited thereto, and the first welding step and the second welding step may also be performed on different lines.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

### [Description of Reference Numerals]

1000: secondary battery 1100: casing
1200: electrode assembly 1210: electrode assembly
1211, 1212: unit electrode plates 1213: separator
1220, 1220a: foil tabs 1300: current collector
1310: body portion 1320: stepped portion
1330: connection portion 1340: transition portion
1400: cap assembly 1410: cap plate
1420, 1420a: terminals 1411: electrolyte injection hole
1412: vent hole

## Claims

1. A secondary battery, comprising:
an electrode assembly including an electrode portion, and a plurality of foil tabs formed on an end of the electrode portion; and
a current collector including a body portion welded to the plurality of foil tabs from an upper side of the foil tabs bent in a bending direction, the body portion having a thickness of T1, and a stepped portion formed at an end of the body portion in the bending direction and having a thickness of T2,
wherein the thickness T1 of the body portion and the thickness T2 of the stepped portion differ from each other.

2. The secondary battery of claim 1, wherein the stepped portion is formed to correspond to a void region formed between the foil tab located at an outermost side in the bending direction and the electrode portion when the foil tabs are bent in the bending direction.

3. The secondary battery of claim 1, wherein the thickness T1 of the body portion is greater than the thickness T2 of the stepped portion.

4. The secondary battery of claim 3, wherein the thickness T2 of the stepped portion is greater than or equal to 1/3 and less than or equal to 2/3 of the thickness T1 of the body portion.

5. The secondary battery of claim 1, wherein the thickness T1 of the body portion is less than the thickness T2 of the stepped portion.

6. The secondary battery of claim 5, wherein the thickness T2 of the stepped portion is determined depending on a height of a void region formed between the foil tab located at an outermost side in the bending direction and the electrode portion when the foil tabs are bent in the bending direction.

7. The secondary battery of claim 1, wherein the thickness T2 of the stepped portion varies in a stepwise manner.

8. The secondary battery of claim 1, wherein the thickness T2 of the stepped portion gradually varies.

9. The secondary battery of claim 1,
wherein the stepped portion is sectioned into N regions depending on a number of foil tabs positioned under the stepped portion,
wherein the thickness T2 of the stepped portion is uniform in each same region and different between different regions.

10. The secondary battery of claim 9, wherein the thickness T2 of the stepped portion varies depending on a number of foil tabs positioned under the stepped portion.

11. The secondary battery of claim 1, wherein the stepped portion is formed from a position above a portion where the foil tab positioned at an outermost side in the bending direction is connected to the electrode portion to an end in the bending direction.

12. The secondary battery of claim 1, wherein a formation length of the stepped portion varies depending on a bending angle at which the foil tabs are bent in the bending direction.

13. The secondary battery of claim 1, wherein a first weld formed by welding the body portion and a second weld formed by welding the stepped portion are formed on the current collector.

14. The secondary battery of claim 1,
wherein the electrode portion comprises a plurality of unit electrode plates each having the corresponding foil tab formed on an end thereof, and a separator positioned respectively between the plurality of unit electrode plates,
the electrode portion being formed by stacking or winding the plurality of unit electrode plates and the separator.

15. A method of manufacturing a secondary battery, comprising:
a preparation operation of preparing an electrode assembly including an electrode portion and a plurality of foil tabs formed on an end of the electrode portion;
a bending operation of bending the plurality of foil tabs in a bending direction;
a seating operation of seating a current collector on an upper side of the bent foil tabs, the current collector including a body portion having a thickness of T1, and a stepped portion formed at an end of the body portion in the bending direction and having a thickness of T2; and
a welding operation of welding the foil tabs and the current collector to each other,
wherein the thickness T1 of the body portion differs from the thickness T2 of the stepped portion.

16. The method of claim 15, wherein in the bending operation, a bending angle at which the foil tabs are bent in the bending direction is adjusted depending on a formation length of the stepped portion.

17. The method of claim 15, wherein in the seating operation, the stepped portion is seated to correspond to a void region formed between the foil tab located at an outermost side in the bending direction and the electrode portion when the foil tabs are bent in the bending direction.

18. The method of claim 15, wherein in the welding operation, an output of a welding apparatus varies between when welding the body portion and when welding the stepped portion.

19. The method of claim 15, wherein in the welding operation, the output of the welding apparatus when welding the stepped portion is adjusted depending on a sum of thicknesses of the foil tabs that are positioned under the stepped portion.

20. The method of claim 15, wherein the welding operation comprises a first welding operation of welding the body portion, and a second welding operation of welding the stepped portion.
